(19) Europäisches Patentamt / European Patent Office / Office européen des brevets

(11) **EP 4 319 354 A1**

(12) **EUROPEAN PATENT APPLICATION**
published in accordance with Art. 153(4) EPC

(43) Date of publication:
**07.02.2024 Bulletin 2024/06**

(21) Application number: **22778592.0**

(22) Date of filing: **17.03.2022**

(51) International Patent Classification (IPC):
**H04W 72/00** (2023.01)

(52) Cooperative Patent Classification (CPC):
**H04W 24/08; H04W 24/10; H04W 72/00**

(86) International application number:
**PCT/CN2022/081482**

(87) International publication number:
**WO 2022/206409 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.04.2021 CN 202110362623**

(71) Applicant: **Datang Mobile Communications
Equipment Co., Ltd.
Beijing 100085 (CN)**

(72) Inventors:
• **LIU, Zhengxuan
Beijing 100085 (CN)**
• **GAO, Qiubin
Beijing 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **INFORMATION REPORTING METHOD, NETWORK SIDE CONFIGURATION METHOD, APPARATUS, DEVICE AND STORAGE MEDIUM**

(57) An information reporting method, a network side configuration method, a device, an apparatus and a storage medium are provided. The information reporting method includes: estimating, by a terminal, downlink channel information; determining, by the terminal, frequency-domain basis vector information in accordance with the downlink channel information; and transmitting, by the terminal, the frequency-domain basis vector information to a network device.

estimating, by a terminal, downlink channel information — 201

determining, by the terminal, frequency-domain basis vector information in accordance with the downlink channel information — 202

transmitting, by the terminal, the frequency-domain basis vector information to a network device — 203

**Fig. 2**

**Description**

**CROSS-REFERENCE TO RELATED APPLICATION**

This application claims a priority of the Chinese patent application No. 202110362623.3 filed in China on April 2, 2021, which is incorporated herein by reference in its entirety.

**TECHNICAL FIELD**

The present disclosure relates to the field of communication technology, in particular to an information reporting method, a network side configuration method, a device, an apparatus and a storage medium.

**BACKGROUND**

When reporting Channel State Information (CSI), a dimension $M_v$ of a codebook parameter represents the quantity of frequency-domain basis vectors. In the related art, the quantity of frequency-domain basis vectors is configured by a network side, but it is not a most appropriate quantity. When excessive frequency-domain basis vectors are reported, a waste of an overhead easily occurs for a terminal. Hence, for a mode of determining the quantity of frequency-domain basis vectors in the related art, a large feedback overhead occurs for the terminal.

**SUMMARY**

An object of the present disclosure is to provide an information reporting method, a network side configuration method, a device, an apparatus and a storage medium, so as to solve the problem in the related art where a large feedback overhead occurs for the terminal due to the mode of determining the quantity of frequency-domain basis vectors.
In order to solve the above-mentioned technical problem, the present disclosure provides the following technical solutions.
In one aspect, the present disclosure provides in some embodiments an information reporting method, including: estimating, by a terminal, downlink channel information; determining, by the terminal, frequency-domain basis vector information in accordance with the downlink channel information; and transmitting, by the terminal, the frequency-domain basis vector information to a network device.
Optionally, the determining, by the terminal, the frequency-domain basis vector information in accordance with the downlink channel information includes: calculating, by the terminal, a compression coefficient corresponding to each frequency-domain basis vector in predetermined frequency-domain basis vectors in accordance with the downlink channel information; and determining, by the terminal, the frequency-domain basis vector information in accordance with the compression coefficient.
Optionally, prior to determining, by the terminal, the frequency-domain basis vector information in accordance with the downlink channel information, the information reporting method further includes receiving, by the terminal, a set of frequency-domain basis vectors configured by the network device, and the determining, by the terminal, the frequency-domain basis vector information in accordance with the downlink channel information includes determining, by the terminal, the frequency-domain basis vector information in accordance with the downlink channel information and the set of frequency-domain basis vectors.
Optionally, the determining, by the terminal, the frequency-domain basis vector information in accordance with the downlink channel information and the set of frequency-domain basis vectors includes: calculating, by the terminal, a compression coefficient corresponding to each frequency-domain basis vector in the set of frequency-domain basis vectors in accordance with the downlink channel information; and determining, by the terminal, the frequency-domain basis vector information in accordance with the compression coefficient.
Optionally, the frequency-domain basis vector information includes at least one of the quantity of frequency-domain basis vectors, indication information corresponding to the frequency-domain basis vector, or a target indication content, the indication information corresponding to the frequency-domain basis vector is used to indicate a frequency-domain basis vector selected by the terminal in the set of frequency-domain basis vectors configured by the network device or a frequency-domain basis vector selected by the terminal in a set of frequency-domain basis vectors predetermined in the terminal, and the target indication content includes the set of frequency-domain basis vectors or the predetermined frequency-domain basis vectors.
Optionally, subsequent to receiving, by the terminal, the set of frequency-domain basis vectors configured by the network device, the information reporting method further includes: receiving, by the terminal, a triggering state transmitted by the network device, the triggering state being used to indicate a reporting mode of the terminal and used to indicate a codebook parameter configured by the network device for the terminal, the codebook parameter including one or more of the set of frequency-domain basis vectors, a size of the set of frequency-domain basis vectors, or start point information of the set of frequency-domain basis vectors; and determining, by the terminal, the codebook parameter in accordance with the triggering state.

Optionally, prior to transmitting, by the terminal, the frequency-domain basis vector information to the network device, the information reporting method further includes determining target bit information in accordance with the frequency-domain basis vector information, the target bit information is used to indicate the quantity of frequency-domain basis vectors and/or indication information corresponding to the frequency-domain basis vector, and the indication information corresponding to the frequency-domain basis vector is used to indicate a selection mode in which the terminal selects the frequency-domain basis vector in the set of frequency-domain basis vectors. The transmitting, by the terminal, the frequency-domain basis vector information to the network device includes transmitting, by the terminal, the frequency-domain basis vector information indicated through the target bit information to the network device.

Optionally, a reporting structure of the terminal includes a two-part reporting structure or a three-part reporting structure. In the case that the frequency-domain basis vector information includes the target indication content and the reporting structure of the terminal includes the two-part reporting structure, the transmitting, by the terminal, the frequency-domain basis vector information to the network device includes transmitting, by the terminal, the target indication content to the network device through a first target part reporting structure, and the first target part reporting structure is a first part reporting structure of the two-part reporting structure. In the case that the reporting structure of the terminal includes the three-part reporting structure, the transmitting, by the terminal, the target indication content to the network device includes transmitting, by the terminal, the target indication content to the network device through a second target part reporting structure, and the second target part reporting structure is a first part reporting structure of the three-part reporting structure.

Optionally, the frequency-domain basis vector information at each transmission layer is the same or different. In the case that the frequency-domain basis vector information at each transmission layer is different, the transmitting, by the terminal, the frequency-domain basis vector information to the network device includes transmitting, by the terminal, Z pieces of frequency-domain basis vector information to the network device, where Z is a positive integer, and Z represents the quantity of transmission layers.

In another aspect, the present disclosure provides in some embodiments a network side configuration method, including receiving, by a network device, frequency-domain basis vector information transmitted by a terminal, the frequency-domain basis vector information being determined by the terminal in accordance with estimated downlink channel information.

Optionally, prior to receiving, by the network device, the frequency-domain basis vector information transmitted by the terminal, the network side configuration method further includes configuring, by the network device, a set of frequency-domain basis vectors for the terminal, and the frequency-domain basis vector information received by the network device from the terminal is determined by the terminal in accordance with the downlink channel information and the set of frequency-domain basis vectors.

Optionally, the frequency-domain basis vector information includes at least one of the quantity of frequency-domain basis vectors, indication information corresponding to the frequency-domain basis vector or a target indication content, the indication information corresponding to the frequency-domain basis vector is used to indicate a frequency-domain basis vector selected by the terminal in the set of frequency-domain basis vectors configured by the network device or a frequency-domain basis vector selected by the terminal in a predefined set of frequency-domain basis vectors, and the target indication content includes the set of frequency-domain basis vectors or the predetermined frequency-domain basis vectors.

Optionally, the receiving, by the network device, the frequency-domain basis vector information transmitted by the terminal includes receiving, by the network device, the frequency-domain basis vector information that is indicated through target bit information and transmitted by the terminal, the target bit information is used to indicate the quantity of frequency-domain basis vectors and/or indication information corresponding to the frequency-domain basis vector, and the indication information corresponding to the frequency-domain basis vector is used to indicate a frequency-domain basis vector selected by the terminal in the set of frequency-domain basis vectors configured by the network device or a frequency-domain basis vector selected by the terminal in a set of frequency-domain basis vectors predetermined in the terminal.

Optionally, subsequent to configuring, by the network device, the set of frequency-domain basis vectors for the terminal, the network side configuration method further includes transmitting, by the network device, a triggering state to the terminal, the triggering state is used to indicate a reporting mode of the terminal and used to indicate a codebook parameter configured by the network device for the terminal, and the codebook parameter includes one or more of the set of frequency-domain basis vectors, a size of the set of frequency-domain basis vectors, or start point information of the set of frequency-domain basis vectors.

Optionally, the frequency-domain basis vector information at each transmission layer is the same or different. In the case that the frequency-domain basis vector information at each transmission layer is different, the receiving, by the network device, the frequency-domain basis vector information transmitted by the terminal includes receiving, by the network device, Z pieces of frequency-domain basis vector information, where Z is a positive integer, and Z represents the quantity of transmission layers.

In yet another aspect, the present disclosure provides in some embodiments a terminal, including a memory, a transceiver and a processor. The memory is configured to store therein a computer program. The transceiver is configured to transmit and receive data under the control of the processor. The processor is configured to read the computer program in the memory to: estimate downlink channel information; determine frequency-domain basis vector information in accordance with the downlink channel information; and transmit the frequency-domain basis vector information to a network device.

Optionally, when determining the frequency-domain basis vector information in accordance with the downlink channel information, the processor is specifically configured to: calculate a compression coefficient corresponding to each frequency-domain basis vector in predetermined frequency-domain basis vectors in accordance with the downlink channel information; and determine the frequency-domain basis vector information in accordance with the compression coefficient.

Optionally, prior to determining the frequency-domain basis vector information in accordance with the downlink channel information, the processor is further configured to receive a set of frequency-domain basis vectors configured by the network device, and when determining the frequency-domain basis vector information in accordance with the downlink channel information, the processor is specifically configured to determine the frequency-domain basis vector information in accordance with the downlink channel information and the set of frequency-domain basis vectors.

Optionally, when determining the frequency-domain basis vector information in accordance with the downlink channel information and the set of frequency-domain basis vectors, the processor is specifically configured to: calculate a compression coefficient corresponding to each frequency-domain basis vector in the set of frequency-domain basis vectors in accordance with the downlink channel information; and determine the frequency-domain basis vector information in accordance with the compression coefficient.

Optionally, subsequent to receiving the set of frequency-domain basis vectors configured by the network device, the processor is further configured to receive a triggering state transmitted by the network device, the triggering state is used to indicate a reporting mode of the terminal and used to indicate a codebook parameter configured by the network device for the terminal, and the codebook parameter includes one or more of the set of frequency-domain basis vectors, a size of the set of frequency-domain basis vectors, or start point information of the set of frequency-domain basis vectors.

Optionally, the frequency-domain basis vector information includes the quantity of frequency-domain basis vectors and indication information corresponding to the frequency-domain basis vector, and the indication information corresponding to the frequency-domain basis vector is used to indicate a frequency-domain basis vector selected by the terminal in the set of frequency-domain basis vectors configured by the network device or a frequency-domain basis vector selected by the terminal in a set of frequency-domain basis vectors predetermined in the terminal.

In still yet another aspect, the present disclosure provides in some embodiments a network device, including a memory, a transceiver and a processor. The memory is configured to store therein a computer program. The transceiver is configured to receive and transmit data under the control of the processor. The processor is configured to read the computer program in the memory to receive frequency-domain basis vector information transmitted by a terminal, and the frequency-domain basis vector information is determined by the terminal in accordance with estimated downlink channel information.

Optionally, prior to receiving the frequency-domain basis vector information transmitted by the terminal, the processor is further configured to configure a set of frequency-domain basis vectors for the terminal, and the frequency-domain basis vector information received by the network device from the terminal is determined by the terminal in accordance with the downlink channel information and the set of frequency-domain basis vectors.

Optionally, the frequency-domain basis vector information includes the quantity of frequency-domain basis vectors and/or indication information corresponding to the frequency-domain basis vector, and the indication information corresponding to the frequency-domain basis vector is used to indicate a frequency-domain basis vector selected by the terminal in the set of frequency-domain basis vectors configured by the network device or a frequency-domain basis vector selected by the terminal in a predefined set of frequency-domain basis vectors.

Optionally, subsequent to configuring the set of frequency-domain basis vectors for the terminal, the processor is further configured to transmit a triggering state to the terminal, the triggering state is used to indicate a reporting mode of the terminal and used to indicate a codebook parameter configured by the network device for the terminal, and the codebook parameter includes one or more of the set of frequency-domain basis vectors, a size of the set of frequency-domain basis vectors, or start point information of the set of frequency-domain basis vectors.

In still yet another aspect, the present disclosure provides in some embodiments a terminal, including: an estimation unit configured to estimate downlink channel information; a first determination unit configured to determine frequency-domain basis vector information in accordance with the downlink channel information; and a transmission unit configured to transmit the frequency-domain basis vector information to a network device.

Optionally, the first determination unit includes: a calculation unit configured to calculate a compression coefficient corresponding to each frequency-domain basis vector in predetermined frequency-domain basis vectors in accordance with the downlink channel information; and a second determination unit configured to determine the frequency-domain basis vector information in accordance with the compression coefficient.

In still yet another aspect, the present disclosure provides in some embodiments a network device, including a reception unit configured to receive frequency-domain basis vector information transmitted by a terminal, the frequency-domain basis vector information being determined by the terminal in accordance with estimated downlink channel information.

Optionally, the network device further includes a configuration unit configured to configure a set of frequency-domain basis vectors for the terminal, and the frequency-domain basis vector information received by the network device from the terminal is determined by the terminal in accordance with the downlink channel information and the set of frequency-domain basis vectors.

In still yet another aspect, the present disclosure provides in some embodiments a processor-readable storage medium storing therein a computer program. The computer program is executed by a processor so as to implement the above-mentioned information reporting method or network side configuration method.

According to the embodiments of the present disclosure, the terminal estimates the downlink channel information, determines the frequency-domain basis vector information in accordance with the downlink channel information, and transmits the frequency-domain basis vector information to the network device. Accordingly, as compared with the related art where a waste of overhead occurs for the terminal when the terminal reports the excessive frequency-domain basis vector information in accordance with the set of frequency-domain basis vectors configured by the network device, in the embodiments of the present disclosure, the frequency-domain basis vector information is accurately determined by the terminal in accordance with the downlink channel information, so it is able to reduce a feedback overhead for the terminal.

## BRIEF DESCRIPTION OF THE DRAWINGS

In order to illustrate the technical solutions of the present disclosure in a clearer manner, the drawings desired for the present disclosure will be described hereinafter briefly. Obviously, the following drawings merely relate to some embodiments of the present disclosure, and based on these drawings, a person skilled in the art may obtain the other drawings without any creative effort.

Fig. 1 is a schematic view showing applicable network architecture according to an embodiment of the present disclosure;
Fig. 2 is a flow chart of an information reporting method according to an embodiment of the present disclosure;
Fig. 3 is a schematic view showing the association of the reporting of a plurality of pieces of CSI and the reporting of each CSI with a resource set;
Fig. 4 is a flow chart of another network side configuration method according to an embodiment of the present disclosure;
Fig. 5 is a schematic view showing a terminal according to an embodiment of the present disclosure;
Fig. 6 is a schematic view showing a network device according to an embodiment of the present disclosure;
Fig. 7 is another schematic view showing the terminal according to an embodiment of the present disclosure; and
Fig. 8 is another schematic view showing the network device according to an embodiment of the present disclosure.

## DETAILED DESCRIPTION

The expression "and/or" in the embodiments of the present disclosure may be merely used to describe the relationship between objects, and it may include three relationships. For example, "A and/or B" may represent that, there is only A, there are both A and B, and there is only B. Further, the symbol "/" usually refers to "or".

The expression "a plurality of" refers to two or more, and the other quantifiers are similar.

In the following, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

An object of the present disclosure is to provide an information reporting method, a network side configuration method, a device, an apparatus and a storage medium, so as to solve the problem in the related art where a large feedback overhead occurs for the terminal due to the mode of determining the quantity of frequency-domain basis vectors.

The method and the device are provided on the basis of a same inventive concept, and a principle of the method for solving the problem is similar to that of the device, so the implementation of the device may refer to that of the method.

Schemes in the embodiments of the present disclosure may be applied to various systems, especially a 5G system, e.g., Global System of Mobile communication (GSM), Code Division Multiple Access (CDMA) system, Wideband Code Division Multiple Access (WCDMA) system, General Packet Radio Service (GPRS) system, Long Term Evolution (LTE) system, LTE Frequency Division Duplexing (FDD) system, LTE Time Division Duplexing (TDD) system, Long Term Evolution Advanced (LTE-A) system, Universal Mobile Telecommunication System (UMTS), Worldwide Interoperability for Microwave Access (WiMAX) system, or 5th-Generation (5G) New Radio (NR) system. Each of these systems includes a terminal device and a network device. Each system further includes a core network part, e.g., an Evolved Packet System (EPS) or 5G system (5GS).

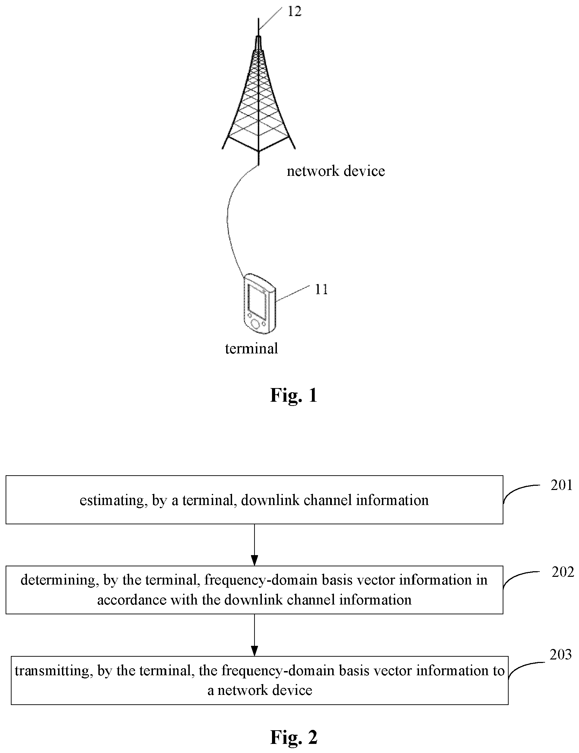

As shown in Fig. 1, an applicable network architecture in the embodiments of the present disclosure includes a terminal 11 and a network device 12.

The terminal involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, remote terminal, access terminal, user terminal, user agent or user device, which will not be particularly defined herein.

The network device involved in the embodiments of the present disclosure may be a base station which includes a plurality of cells providing services for the terminal. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the GSM or CDMA system, a NodeB in the WCDMA system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Multi Input Multi Output (MIMO) transmission is performed between the network device and the terminal each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

During the reporting of CSI, it is impossible to determine an appropriate quantity of frequency-domain basis vectors through a dimension $M_v$ of a codebook parameter, so a large feedback overhead occurs for the terminal. In view of this, the present disclosure provides in the embodiments of the present disclosure an information reporting method. It should be appreciated that, the method in the embodiments of the present disclosure may be used to, but not limited to, report codebook parameter information for Rel-17 port.

As shown in Fig. 2, the present disclosure provides in some embodiments an information reporting method, which includes the following steps.

Step 201: estimating, by a terminal, downlink channel information.

The terminal may estimate the downlink channel information in accordance with a Channel State Information Reference Signal (CSI-RS) from a network device. For example, the network device transmits a beam-formed CSI-RS through P ports, and configures K windows or sets including frequency-domain basis vectors for the terminal, where $K \geq 1$, a size of the window or the set is $N_k$, and $k = 1, \cdots, K$. The terminal estimates the downlink channel information in accordance with the beam-formed CSI-RS transmitted through the P ports.

Step 202: determining, by the terminal, frequency-domain basis vector information in accordance with the downlink channel information.

Step 203: transmitting, by the terminal, the frequency-domain basis vector information to the network device.

According to the information reporting method in the embodiments of the present disclosure, the terminal estimates the downlink channel information, determines the frequency-domain basis vector information in accordance with the downlink channel information, and transmits the frequency-domain basis vector information to the network device. As compared with the related art where a waste of overhead occurs for the terminal when the terminal reports the excessive frequency-domain basis vector information in accordance with the set of frequency-domain basis vectors configured by the network device, in the embodiments of the present disclosure, the frequency-domain basis vector information is accurately determined by the terminal in accordance with the downlink channel information, so it is able to reduce a feedback overhead for the terminal.

It should be appreciated that, in some embodiments of the present disclosure, the frequency-domain basis vector information includes at least one of the quantity of frequency-domain basis vectors, indication information corresponding to the frequency-domain basis vector, or a target indication content, the indication information corresponding to the frequency-domain basis vector is used to indicate a frequency-domain basis vector selected by the terminal in the set of frequency-domain basis vectors configured by the network device or a frequency-domain basis vector selected by the terminal in a set of frequency-domain basis vectors predetermined in the terminal, and the target indication content includes the set of frequency-domain basis vectors or the predetermined frequency-domain basis vectors.

For example, the predetermined set of frequency-domain basis vectors in the terminal may be a set of candidate frequency-domain basis vectors determined by the terminal in accordance with an active channel. The target indication content may be 1-bit indication information, and the terminal indicates, through the 1-bit indication information, whether the frequency-domain basis vector information transmitted by the terminal includes the set of frequency-domain basis vectors configured by the network device or the predetermined frequency-domain basis vectors. During the implementation, the predetermined frequency-domain basis vector may be a frequency-domain basis vector whose elements are all 1. A length of the frequency-domain basis vector may be determined in accordance with a Channel Quality Indicator (CQI) sub-band size and a parameter R configured by a network. More specifically, when there are Z transmission layers, Z-bit indication information is used. However, the above is for illustrative purposes only, and in some other embodiments of the present disclosure, any other indication information may be used, as long as it indicates whether the frequency-domain basis vector information reported by the terminal is configured by the network device or determined by the terminal. Any alterations will fall within the scope of the present disclosure.

To be specific, in a possible embodiment of the present disclosure, the frequency-domain basis vector information includes the quantity of frequency-domain basis vectors, i.e., the quantity of frequency-domain basis vectors is transmitted by the terminal to the network device. Alternatively, in another possible embodiment of the present disclosure, the frequency-domain basis vector information includes the indication information corresponding to the frequency-domain basis vector, i.e., the frequency-domain basis vector selected by the terminal in the set of frequency-domain basis vectors is transmitted by the terminal to the network device. During the implementation, the set of frequency-domain basis vectors may be configured by the network device for the terminal, which will be described hereinafter in details. In yet another possible embodiment of the present disclosure, the frequency-domain basis vector information includes the quantity of frequency-domain basis vectors and the indication information corresponding to the frequency-domain basis vector, i.e., both the quantity of frequency-domain basis vectors and the frequency-domain basis vector selected by the terminal in the set of frequency-domain basis vectors are transmitted by the terminal to the network device. In some other embodiments of the present disclosure, the frequency-domain basis vector information further includes the other information. The above is for illustrative purposes only, and any alterations will fall within the scope of the present disclosure.

In a possible embodiment of the present disclosure, the terminal may determine the frequency-domain basis vector information.

Optionally, the determining, by the terminal, the frequency-domain basis vector information in accordance with the downlink channel information includes: calculating, by the terminal, a compression coefficient corresponding to each frequency-domain basis vector in predetermined frequency-domain basis vectors in accordance with the downlink channel information; and determining, by the terminal, the frequency-domain basis vector information in accordance with the compression coefficient.

For example, when the frequency-domain basis vector information includes the quantity of frequency-domain basis vectors, the terminal determines the frequency-domain basis vector information in accordance with the downlink channel information as follows. At first, the terminal estimates the downlink channel information for each port in accordance with the received CSI-RS for P ports in the above step to obtain active channels. For a $p^{th}$ port, active channels estimated on $N_3$ frequency-domain units are $\hat{H}_1, \cdots, \hat{H}_{N3}$.

When the quantity of candidate frequency-domain basis vectors determined by the terminal in accordance with the active channels is $N_3$, a compression coefficient corresponding to an $n^{th}$ frequency-domain basis vector $f_n$ is calculated

through $c'_{p,n} = \left[ \hat{H}_1, \cdots, \hat{H}_{N_3} \right] f_n$.

Next, compression coefficients $c'_{p,n}$ corresponding to all the frequency-domain basis vectors are calculated in a traversing manner, where $p = 1, \cdots, P$; $n = 1, \cdots, N_3$.

Further, a value of $M_v$ is determined in accordance with the compression coefficient $c'_{p,n}$. For example, the value of $M_v$ is determined in accordance with a frequency-domain basis vector with a minimum compression coefficient.

In a possible embodiment of the present disclosure, the terminal determines the frequency-domain basis vector information in accordance with a set of frequency-domain basis vectors configured by the network device. Optionally, prior to determining by the terminal the frequency-domain basis vector information in accordance with the downlink channel information, the method further includes receiving, by the terminal, the set of frequency-domain basis vectors configured by the network device, and the determining, by the terminal, the frequency-domain basis vector information in accordance with the downlink channel information includes determining, by the terminal, the frequency-domain basis vector information in accordance with the downlink channel information and the set of frequency-domain basis vectors.

During the implementation, the terminal determines the frequency-domain basis vector information in accordance with the downlink channel information and the set of frequency-domain basis vectors, so as to determine an appropriate quantity of frequency-domain basis vectors. For example, when a value of the frequency-domain basis vector configured by the network device is 4 and a value of the frequency-domain basis vector determined by terminal in accordance with the downlink channel information is 2, a value of $M_v$ reported by the terminal to the network device is 2. In this way, it is able to prevent the occurrence of a waste of a feedback overhead for the terminal when excessive frequency-domain basis vectors are reported to the network device.

Optionally, the determining, by the terminal, the frequency-domain basis vector information in accordance with the downlink channel information and the set of frequency-domain basis vectors includes: calculating, by the terminal, a compression coefficient corresponding to each frequency-domain basis vector in the set of frequency-domain basis vectors in accordance with the downlink channel information; and determining, by the terminal, the frequency-domain basis vector information in accordance with the compression coefficient.

During the implementation, the terminal determines the frequency-domain basis vector information in accordance with the downlink channel information and the set of frequency-domain basis vectors as follows.

At first, the terminal estimates the downlink channel information for each port in accordance with the received CSI-RS for P ports in the above step to obtain active channels. For a p$^{th}$ port, active channels estimated on $N_3$ frequency-domain units are $\hat{H}_1, \cdots, \hat{H}_{N3}$.

Next, a compression coefficient $c'_{p,n}$ corresponding to each frequency-domain basis vector in the set of frequency-domain basis vectors is calculated through the above-mentioned formula, where $f_n$ represents an n$^{th}$ frequency-domain basis vector in the configured set of frequency-domain basis vectors, wherein $p = 1, \cdots, P$; $n = 1, \cdots, N$, and N represents the set of frequency-domain basis vectors configured by the network device for the terminal.

Further, a value of $M_v$ is determined in accordance with the above compression coefficient $c'_{p,n}$. For example, the value of $M_v$ is determined in accordance with a frequency-domain basis vector with a minimum compression coefficient.

In some embodiments of the present disclosure, the network device configures a codebook parameter for the terminal, and transmits a triggering state to the terminal, so as to indicate the terminal to select the frequency-domain basis vector information through associating the codebook parameter with the triggering state. The network device transmits the triggering state to the terminal and the terminal determines a reporting mode and the codebook parameter in accordance with the triggering state as follows.

Optionally, subsequent to receiving, by the terminal, the set of frequency-domain basis vectors configured by the network device, the information reporting method further includes: receiving, by the terminal, a triggering state transmitted by the network device, the triggering state being used to indicate the reporting mode of the terminal and the codebook parameter configured by the network device for the terminal, the codebook parameter including one or more of the set of frequency-domain basis vectors, a size of the set of frequency-domain basis vectors, or start point information of the set of frequency-domain basis vectors; and determining, by the terminal, the codebook parameter in accordance with the triggering state.

During the implementation, the terminal determines the codebook parameter in accordance with the triggering state as follows.

At first, it should be appreciated that, when $W_f$ is configured by the network device for the terminal, the network device configures a start point $M_{initial}$ of a window or set and a window or set including number $N \geq M_v$ of frequency-domain basis vectors for the terminal, or the terminal selects $M_v$ frequency-domain basis vectors in consecutive $N$ frequency-domain basis vectors in the window or set. The parameter $M_v$ may also be configured by the network device. The parameters $M_{initial}$, $N$ or $M_v$ configured for the terminal through high-layer signaling Radio Resource Control (RRC) or Medium Access Control Control Element (MAC-CE) may include a group of candidate values, or a plurality of sets is configured through the high-layer signaling RRC or MAC-CE and each set includes two or three of the parameters of $M_{initial}$, $N$ or $M_v$. When an information field is added in Downlink Control Information (DCI) to indicate the information, an overhead for the DCI is increased. Hence, it is necessary to determine the codebook parameter in the case of no increase in the overhead for the DCI.

To be specific, DCI formats for uplink scheduling include DCI 0_1 and DCI 0_2, and the DCI in each of the two formats includes a CSI request field having 0 to 6 bits. A length of the CSI request field is configured through an information length *(reportTriggerSize)* of the CSI request field in RRC signaling. The CSI request field is used to activate one triggering state corresponding to one or more pieces of CSI reporting, and reported contents include CSI-RS Resource Indicator (CRI), Rank Indicator (RI), Precoding Matrix Indicator (PMI), Channel Quality Indicator (CQI), etc.

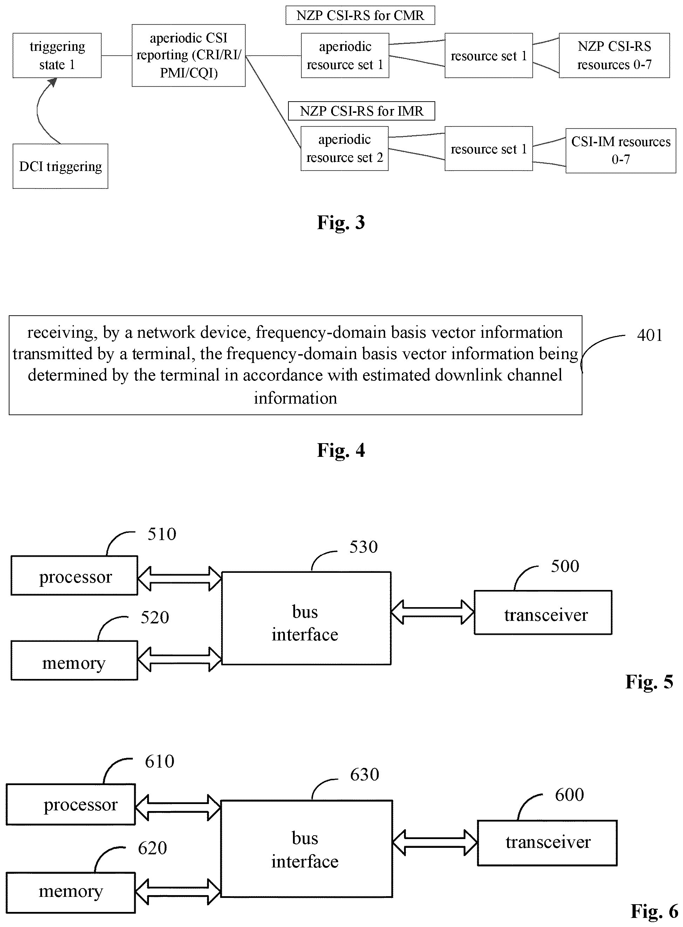

The reporting mode of the terminal includes aperiodic CSI reporting and semi-persistent CSI reporting. In the aperiodic CSI reporting, configuration and triggering are performed through the MAC CE in conjunction with the DCI, and the reporting is performed on the basis of a Physical Uplink Shared Channel (PUSCH). A plurality of CSI triggering states is configured through RRC signaling, and each triggering state corresponds to one or more pieces of CSI reporting. In the DCI format 0_1/0_2, a size of the CSI request field is configured through the RRC signaling as 0 to 6 bits, so at most 63 CSI triggering states are indicated (along with one reserved state). At most 128 CSI triggering states are configured through the RRC signaling. When the quantity of CSI triggering states configured through the RRC signaling exceeds 63, 63 CSI triggering states in these CSI triggering states are mapped to, and indicated through, the CSI request field through the MAC CE. Each triggering state is associated with one, two or three aperiodic resource settings. When a resource setting includes a plurality of aperiodic resource sets, merely one resource set is selected, and each resource set includes a plurality of CSI-RS resources, as shown in Fig. 3. The PMI is calculated in accordance with the CSI-RS resource for CMR in the resource setting associated with the CSI reporting.

Similar to the aperiodic CSI reporting, the PUSCH-based SP-CSI is also activated and deactivated through the DCI. Under a CSI feedback framework, a plurality of (at most 64) triggering states is configured through the RRC signaling, and each triggering state corresponds to one CSI reporting setting. The CSI request field in the DCI is used to activate one triggering state, and there may be a plurality of pieces of PUSCH-based SP-CSI in an activated state at a same time point. Different from the aperiodic CSI reporting, in the semi-persistent CSI reporting, the PMI is calculated in accordance with a CSI-RS for a CMR closest to the DCI before the DCI is triggered, and the CSI-RS resource is included in the CSI resource setting associated with the triggering of the DCI.

Currently, the parameter $M_{initial}$, $N$ or $M_v$ configured for the terminal through the high-layer signaling RRC or MAC-CE may include a group of candidate values, or a plurality of sets including various parameters is configured through the high-layer signaling RRC or MAC-CE. There is currently no corresponding codebook parameter indication method. When an information field is directly added in the DCI to indicate the codebook parameter in the related art, an overhead for the DCI may increase.

Hence, in the embodiments of the present disclosure, in order to reduce the overhead for the DCI, the codebook parameter is determined through associating the codebook parameter with the triggering state of the DCI as follows.

Step 1: the network device configures the codebook parameter, which includes at least one of $M_v$, $N$ or $M_{initial}$, or configures a combination of a plurality of parameters, for the terminal through the high-layer signaling RRC or the MAC-CE. Each parameter includes number $X \geq 1$ of candidate values, or there are number $X \geq 1$ of candidate parameter combinations. The network device configures number $S \geq 1$ of triggering states for each piece of CSI reporting for the terminal.

Step 2: a triggering state is activated through the CSI request field in the DCI transmitted by the network device. The triggering state is used to indicate not only number $K \geq 1$ of pieces of aperiodic CSI reporting or PUSCH-based semi-persistent CSI reporting, but also one or more of the parameter values or a combination of various parameters in Step 1.

Step 3: the terminal determines a value of the codebook parameter $M_v$, or $N$ or $M_{initial}$ in accordance with a configuration of the network device and/or the DCI indication.

Step 4: the terminal calculates the CRI, or RI, or PMI or CQI in accordance with the indicated codebook parameter, and reports it to the network device through corresponding CSI.

In the embodiments of the present disclosure, joint coding and indication are achieved in accordance with the triggering state activated through the CSI request field in the DCI and the codebook parameter, i.e., one triggering state corresponds to not only one or more pieces of aperiodic or semi-persistent CSI reporting, but also one or more codebook parameters or a combination of the codebook parameters, so that the UE determines a corresponding CSI report ID and codebook parameter in accordance with a coding method.

$M_v$ represents the quantity of frequency-domain basis vectors, $N$ represents a size of a window or set, and $M_{initial}$ represents a start point of the window. The codebook parameter refers to one or more of $M_v$, $N$ or $M_{initial}$, or a combination of these parameters. The network device configures for the terminal reportTriggerSize, so as to indicate Y triggering states.

In the embodiments of the present disclosure, through the above-mentioned method, it is able to indicate the corresponding codebook parameter to the terminal without any increase in an overhead for the DCI.

In a possible embodiment of the present disclosure, behaviors of the network device and the terminal as well as the indication determination method will be described as follows.

At first, the network device configures the codebook parameter, which includes at least one of $M_v$, $N$ or $M_{initial}$, or a combination of various parameters, for the terminal through the high-layer signaling RRC or the MAC-CE, and each parameter includes number $X \geq 1$ of candidate values or there are number $X \geq 1$ of candidate parameter combinations. The network device configures number $S \geq 1$ of triggering states for each piece of CSI reporting for the terminal, and $S \geq X$.

Then, the network device transmits the CSI request field in the DCI for activating one triggering state to the terminal. The triggering state not only indicates K=1 piece of aperiodic CSI reporting or PUSCH-based semi-persistent CSI reporting, but also indicates one or more of the above parameters or a combination of parameters in the parameter combinations.

In a possible embodiment of the present disclosure, the terminal determines the codebook parameter in accordance with the triggering state and the candidate parameter or combination configured by the network device as follows.

When Y=X and an $n^{th}$ triggering state in the Y triggering states is triggered through the DCI, the terminal determines the codebook parameter corresponding to the CSI reporting as an $n^{th}$ candidate parameter in the X candidate parameters or an $n^{th}$ combination in the X combinations configured by the network device.

When Y>X, the $n^{th}$ triggering state in the Y triggering states is triggered through the DCI and $n \leq X$, the terminal determines the codebook parameter corresponding to the CSI reporting as an $n^{th}$ candidate parameter in the X candidate parameters or an $n^{th}$ combination in the X combinations configured by the network device.

When Y>X, an $m^{th}$ triggering state in the Y triggering states is triggered through the DCI and $m > X$, the terminal determines the codebook parameter corresponding to the CSI reporting as a $(\mathrm{mod}(X/m))^{th}$ candidate parameter in the X candidate parameters or a $(\mathrm{mod}(X/m))^{th}$ combination in the X combinations configured by the network device. The above is for illustrative purposes only, but shall not be construed as limiting the present disclosure. It should be appreciated that, the calculation formula here is used to illustratively show a calculation relationship between Y and X. In some other embodiments of the present disclosure, through simple mathematical conversion, the relationship between Y and X may be expressed in any other calculation formulae, and these calculation formulae shall also fall within the scope of the present disclosure.

It should be appreciated that, the terminal determines the codebook parameter corresponding to the CSI reporting as a default one, e.g., a first one, in the X candidate parameters or combinations.

In another possible embodiment of the present disclosure, a triggering state is activated through the CSI request field in the DCI from the network device. The triggering state not only indicates number K>1 of pieces of aperiodic CSI reporting or PUSCH-based semi-persistent CSI reporting, but also indicates one or more parameters in the above-mentioned codebook parameters, or a combination of various parameters. The codebook parameters corresponding to K pieces of CSI reporting may be determined as mentioned hereinabove, and the K pieces of CSI reporting correspond to a same codebook parameter.

Optionally, the K pieces of CSI reporting correspond to different codebook parameters. To be specific, the terminal determines a codebook parameter corresponding to a first piece of CSI reporting as an $n^{th}$ parameter or set in the X parameters or sets, and determines a codebook parameter corresponding to a $k^{th}$ piece of CSI reporting as an $(n+k)^{th}$ parameter or set in the X parameters or sets. When $n+k>X$, the terminal determines the codebook parameter corresponding to the $k^{th}$ piece of CSI reporting as a $(\mathrm{mod}(n+k,X))^{th}$ parameter or set in the X parameters or sets, where $\mathrm{mod}(n+k,X)$ represents a modulo operation.

Further, the terminal calculates CSI feedback information in accordance with the codebook parameter determined through the above method in conjunction with the downlink channel estimated through a CSI-RS resource for a measurement channel associated with the CSI reporting, and reports it to the network device.

The network device transmits the triggering state to the terminal after configuring the codebook parameter for the terminal as mentioned hereinabove, so that the terminal determines the reporting mode and the codebook parameter to be reported, which will be described hereinafter in conjunction with the embodiments.

First Embodiment

In this embodiment of the present disclosure, there is number K=1 of piece of aperiodic CSI reporting or PUSCH-based semi-persistent CSI reporting, and the triggering state is jointly encoded and indicated with a codebook parameter.

A base station configures a plurality of pieces of CSI reporting information for the UE, and each triggering state corresponds to one piece of CSI reporting. The information includes codebook parameters $M_v$, $N$ and $M_{initial}$. The information includes a group of X=4 parameter values, i.e., 0, N3/4, N3/2, and N3. The base station further configures *reportTriggerSize* as 3 for the UE through RRC signaling. A DCI field has a size of 3 bits for indicating 7 triggering states, with a triggering state 0 being reserved. Table 1 shows the joint coding and indication of a codebook parameter with the codebook parameter $M_{initial}$.

For example, the base station transmits the DCI for triggering the aperiodic SRS transmission to the UE, and a value of the DCI field is 2. At this time, the aperiodic CSI reporting corresponding to a triggering state of 2 is activated, and the codebook parameter $M_{initial}$ corresponding to the CSI reporting is N3/4.

Table 1: joint coding and indication of codebook parameter with codebook parameter $M_{initial}$

| Triggering state | Value of $M_{initial}$ |
|---|---|
| 1 | 0 |
| 2 | N3/4 |
| 3 | N3/2 |
| 4 | N3 |
| 5 | n/a |
| 6 | n/a |
| 7 | n/a |

In Table 1, n/a indicates that a corresponding codebook parameter is not determined. As shown in Table 1, the terminal determines an ID of the CSI reporting and a value of the codebook parameter $M_{initial}$ in accordance with the DCI, calculates the feedback information such as CRI, or RI or CQI in accordance with the other parameters configured by the network device, e.g., $M_v$ and N, and the channel information measured through the CSI-RS resource associated with the CSI reporting, and then reports the feedback information to the network device.

Second Embodiment

In this embodiment of the present disclosure, there are number K>1 of pieces of aperiodic CSI reporting or PUSCH-based semi-persistent CSI reporting, and the triggering state is jointly encoded and indicated with a set of codebook parameters.

The base station configures a plurality of pieces of CSI reporting information for the UE, and each triggering state corresponds to one piece of CSI reporting. The CSI reporting information includes X=4 sets consisting of the codebook parameters $M_v$, N and $M_{initial}$, i.e., {1,4,0}, {2,4,N3/4}, {3,4, N3/2} and {4,4, N3}. The base station further configures *reportTriggerSize* as 3 for the UE through RRC signaling. A DCI field has a size of 3 bits for indicating 7 triggering states, with a triggering state 0 being reserved. Table 2 shows the joint coding and indication of a codebook parameter with the set of codebook parameters {$M_v$, N, $M_{initial}$}.

For example, the base station transmits the DCI for triggering the aperiodic SRS transmission to the UE, and a value of the DCI field is 3. At this time, the aperiodic CSI reporting corresponding to a triggering state of 2 is activated, and the set of codebook parameters corresponding to the CSI reporting is {3,4, N3/2}.

Table 2: joint coding and indication of codebook parameter with set of codebook parameters

| Triggering state | Set of codebook parameters {$M_v$, N, $M_{initial}$} |
|---|---|
| 1 | {1,4,0} |
| 2 | {2,4,N3/4} |
| 3 | {3,4,N3/2} |
| 4 | {4,4,N3} |
| 5 | n/a |
| 6 | n/a |
| 7 | n/a |

As shown in Table 2, the terminal determines an ID of the CSI reporting and values of the codebook parameters, i.e., $M_v$ =3, N=4, $M_{initial}$ =N3/2, in accordance with the DCI, calculates the feedback information such as CRI, or RI or CQI in accordance with the other parameters configured by the network device, e.g., $M_v$ and N, and the channel information measured through the CSI-RS resource associated with the CSI reporting, and then reports the feedback information to the network device. Especially, when a value of m in the DCI field is 5, a set of codebook parameters corresponding to the CSI reporting is m-X=1, i.e., {1,4,0}.

Processing behaviors of the UE may refer to those mentioned hereinabove, and thus will not be particularly defined herein.

Third Embodiment

In this embodiment of the present disclosure, there are K>1 pieces of aperiodic CSI reporting or PUSCH-based semi-persistent CSI reporting.

The base station configures a plurality of pieces of CSI reporting information for the terminal, and each triggering state corresponds to K=2 pieces of CSI reporting. The CSI reporting information includes codebook parameters $M_v$, $N$ and $M_{initial}$. The information includes a group of X=4 parameter values, i.e., 0, N3/4, N3/2, and N3. The base station further configures *reportTriggerSize* as 3 for the UE through RRC signaling. A DCI field has a size of 3 bits for indicating 7 triggering states, with a triggering state 0 being reserved. Table 3 shows the joint coding and indication of a codebook parameter with the codebook parameter $M_{initial}$.

For example, the base station transmits the DCI for triggering the aperiodic SRS transmission to the UE, and a value of the DCI field is 2. At this time, the aperiodic CSI reporting corresponding to a triggering state of 2 is activated, and the codebook parameter $M_{initial}$ corresponding to the two pieces of CSI reporting is N3/4.

Table 3: joint coding and indication of codebook parameter with codebook parameter $M_{initial}$

| Triggering state | Value of $M_{initial}$ |
|---|---|
| 1 | 0 |
| 2 | N3/4 |
| 3 | N3/2 |
| 4 | N3 |
| 5 | n/a |
| 6 | n/a |
| 7 | n/a |

As shown in Table 3, the value of $M_{initial}$ corresponding to a first piece of CSI reporting is N3/4, and the value of $M_{initial}$ corresponding to a second piece of CSI reporting is N3/2, i.e., a value of the codebook parameter corresponding to a triggering state n+1=3. The terminal determines IDs of the two pieces of CSI reporting and a value of the codebook parameter $M_{initial}$ in accordance with the DCI, calculates the feedback information such as CRI, RI or CQI in accordance with the other parameters configured by the network device, e.g., $M_v$ and $N$, and the channel information measured through the CSI-RS resource associated with the two pieces of CSI reporting, and then reports the feedback information to the network device.

During the implementation, the triggering state indicated through the DCI request field is used to not only indicate one or more pieces of aperiodic or PUSCH-based semi-persistent CSI reporting, but also indicate one or more codebook parameters for a port selection codebook or a combination of various parameters, so that a DCI load remains unchanged.

In the above-mentioned method, a triggering state is active through the CSI request field in the DCI transmitted by the network device. The triggering state is used to not only indicate K=1 piece of aperiodic or PUSCH-based semi-persistent CSI reporting, but also indicate one or more parameter values of the codebook parameters or a combination of various parameters. ReportTriggerSize configured by the network device for the terminal is used to indicate a relationship between Y triggering states and X parameters or combinations, so as to determine a method for indicating the values of the codebook parameters or the set of codebook parameters.

Alternatively, a triggering state is active through the CSI request field in the DCI transmitted by the network device. The triggering state is used to not only indicate number K>1 of pieces of aperiodic or PUSCH-based semi-persistent CSI reporting, but also indicate one or more parameter values of the codebook parameters or a combination of various parameters. The codebook parameters corresponding to the K pieces of CSI reporting may be determined as mentioned hereinabove, which will not be particularly defined herein. In addition, the codebook parameters corresponding to the K pieces of CSI reporting are the same.

Further, through the method of determining, by the terminal, different codebook parameters or sets corresponding to number K>1 of pieces of CSI reporting, it is able to flexibly indicate the codebook parameter without changing the size of the DCI signaling.

Optionally, prior to transmitting, by the terminal, the frequency-domain basis vector information to the network device, the information reporting method further includes determining target bit information in accordance with the frequency-domain basis vector information, the target bit information is used to indicate the quantity of frequency-domain basis vectors and/or indication information corresponding to the frequency-domain basis vector, and the indication information corresponding to the frequency-domain basis vector is used to indicate a selection mode in which the terminal selects the frequency-domain basis vector in the set of frequency-domain basis vectors. The transmitting, by the terminal, the frequency-domain basis vector information to the network device includes transmitting, by the terminal, the frequency-domain basis vector information indicated through the target bit information to the network device.

During the implementation, the target bit information may have $[\log_2(N)]$ bits, i.e., the terminal may report the target bit information having $[\log_2(N)]$ bits to indicate the quantity $M_v$ of frequency-domain basis vectors used at all transmission layers, where N represents the quantity of frequency-domain basis vectors. For example, when the quantity of frequency-domain basis vectors is 4, N is 4, and two bits need to be used to indicate the quantity $M_v$ of frequency-domain basis vectors used at all the transmission layers. In a possible embodiment of the present disclosure, the target bit information is expressed in the form of a binary system, e.g., "00", "01", "10" or "11".

In an embodiment of the present disclosure, the terminal further reports 1 bit through a single independent piece of CSI reporting to indicate whether $M_v$ at all the transmission layers is configured by the network device for the terminal or is reported by the terminal.

In some embodiments of the present disclosure, the terminal further reports the target indication content through a part of a reporting structure.

In a possible embodiment of the present disclosure, the reporting structure of the terminal includes a two-part reporting structure or a three-part reporting structure. In the case that the reporting structure of the terminal includes the two-part reporting structure, the transmitting, by the terminal, the target indication content to the network device includes transmitting, by the terminal, the target indication content to the network device through a first target part reporting structure, and the first target part reporting structure is a first part reporting structure of the two-part reporting structure. In the case that the reporting structure of the terminal includes the three-part reporting structure, the transmitting, by the terminal, the target indication content to the network device includes transmitting, by the terminal, the target indication content to the network device through a second target part reporting structure, and the second target part reporting structure is a first part reporting structure of the three-part reporting structure.

It should be appreciated that, the codebook parameter $M_v$ is selected for Rel-17 port, the codebook parameter $M_v$ is reported through Part1 and Part2, or through PartO, Part1 and Part2.

To be specific, when the codebook parameter is reported through Part1 and Part2, a content reported in Part1 at least includes one or more of an RI, a wideband CQI, a sub-band CQI, the total quantity $K_{NZ}$ of non-zero coefficients at all layers, the quantity of frequency-domain basis vectors selected by the terminal, a port selection indicator, or the quantity of selected ports. A content reported in Part2 at least includes one or more of a Strongest Coefficient Indicator (SCI) at each layer, a frequency-domain basis vector indicator, a reference amplitude, a non-zero coefficient, a non-zero coefficient position indicator, or a port selection indicator.

When the codebook parameter is reported through PartO, Part1 and Part2, a content reported in Part0 is used to indicate whether the value of $M_v$ reported in Part1 is configured by the network device or reported by the terminal. A content reported in Part1 at least includes one or more of an RI, a wideband CQI, a sub-band CQI, the total quantity $K_{NZ}$ of non-zero coefficients at all layers, the quantity of frequency-domain basis vectors selected by the terminal, a port selection indicator, or the quantity of selected ports. A content reported in Part2 at least includes one or more of an SCI at each layer, a frequency-domain basis vector indicator, a reference amplitude, a non-zero coefficient, a non-zero coefficient position indicator, or a port selection indicator.

In other words, when the codebook parameter is reported through Part1 and Part2, whether $M_v$ is configured by the network device for the terminal or reported by the terminal is indicated through Part1, and when the codebook parameter is reported through PartO, Part1 and Part2, $M_v$ configured by the network device for the terminal is indicated through Part0. The above is for illustrative purposes only, but shall not be construed as limiting the present disclosure. In this way, it is able to rapidly determine, in accordance with the target indication content, whether the reported $M_v$ is configured by the network device or determined by the terminal in accordance with the estimated downlink channel.

In a possible embodiment of the present disclosure, the frequency-domain basis vector information at each transmission layer is the same or different. In the case that the frequency-domain basis vector information at each transmission layer is different, the transmitting, by the terminal, the frequency-domain basis vector information to the network device includes transmitting, by the terminal, Z pieces of frequency-domain basis vector information to the network device, where Z is a positive integer, and Z represents the quantity of transmission layers.

In the embodiments of the present disclosure, methods for indicating and reporting $M_v$ have been described when the selection of $M_v$ is layer-common and when the selection of $M_v$ is layer-specific. When the selection of $M_v$ is

layer-common, it means that $M_v$ at L layers is indicated through one piece of $M_v$ indication information, and when the selection of $M_v$ is layer- specific, it means that $M_{l,v}$ at an l$^{th}$ layer is indicated through one piece of $M_{l,v}$ indication information, and $M_v$ at L layers needs to be indicated through L pieces of $M_v$ indication information. In other words, when the selection of $M_v$ is layer-common, the values of $M_v$ at all layers are the same, and when the selection of $M_v$ is layer-specific, the values of $M_v$ at all layers are the same or different. During the reporting, one piece of frequency-domain basis vector information is transmitted with respect to each transmission layer. For example, when there are two transmission layers, the selection is layer-common and the value of $M_v$ is 4, the values of $M_v$ at the two transmission layers are both 4; and when the selection is layer-specific, the values of $M_v$ at the two transmission layers are both 4 or the value of $M_v$ at a first transmission layer is 2 while the value of $M_v$ at a second transmission layer is 4. The above is for illustrative purposes only. More specifically, the frequency-domain basis vector information at each layer corresponds to one target indication content, and the target indication content is use to indicate whether the frequency-domain basis vector information at each transmission layer is a frequency-domain basis vector in the set of frequency-domain basis vectors configured by the network device or a predetermined frequency-domain basis vector.

The steps of reporting, by the terminal, the value of $M_v$ will be described hereinafter when the quantity K of frequency-domain basis vectors is 1 or greater than 1.

When K=1, $N = N_1$.

When the selection of $M_v$ is layer-common, indication information having $\lceil \log_2(N) \rceil$ bits is reported through Part1 to indicate the quantity $M_v$ of frequency-domain basis vectors at all the transmission layers.

In a possible embodiment of the present disclosure, the network device configures $M_v > 1$ for the terminal, and whether the value of $M_v$ is 1 at all the transmission layers or the value of $M_v$ is configured by the network device for the terminal is reported through 1 bit in Part1.

In another possible embodiment of the present disclosure, the network device configures $M_v = 1$ for the terminal, and the CSI reporting includes Part0, Part1 and Part2. 1-bit information is reported through Part0 or a single piece of CSI to indicate whether $M_v=1$ is configured by the network device for the terminal at all transmission layers, or $M_v$ is determined and reported by the terminal in accordance with the estimated downlink channel information. When $M_v$ is reported by the terminal, information having $\lceil \log_2(N) \rceil$ bits needs to be reported through Part1 to indicate the quantity $M_v$ of frequency-domain basis vectors at all transmission layers.

When the selection of $M_v$ is layer-specific, information having $L \times \lceil \log_2(N) \rceil$ bits is reported through Part1 to indicate the quantity $M_{l,v}$ of frequency-domain basis vectors at an l$^{th}$ layer in the L transmission layers.

In an embodiment of the present disclosure, the network device configures a parameter $M_v > 1$ or a plurality of $M_{l,v} > 1$ for the terminal. Information having L bits is reported through Part1 to indicate that the value of $M_{l,v}$ at the l$^{th}$ transmission layer is 1 or the value of $M_{l,v}$ is configured by the network device for the terminal.

In an embodiment of the present disclosure, the network device configures $M_v = 1$ for the terminal, and the CSI reporting includes Part0, Part1 and Part2. L-bit information is reported through a single piece of CSI in Part0 to indicate whether $M_{l,v}=1$ is configured by the network device for the terminal at a transmission layer, or $M_{l,v}$ is reported by the terminal. When $M_{l,v}$ is reported by the terminal, information having $\lceil \log_2(N) \rceil$ bits needs to be reported through Part1 to indicate the quantity $M_{l,v}$ of frequency-domain basis vectors at the l$^{th}$ layer.

When the information is reported through the single piece of CSI, it means that the information is reported through a CSI reporting setting not including the PMI, and in the subsequent calculation of the PMI, the value of $M_v$ reported by the terminal is adopted.

When $K>1$ and the selection of $M_v$ is layer-common, information having $K \times \lceil \log_2(N) \rceil$ bits is reported through Part1 to indicate the quantity $M_v$ of frequency-domain basis vectors in each window/set at all the transmission layers, where $M_v \leq min(N_k)$, k = 1, $\cdots$, K, and $min(N_k)$ represents a minimum value in K windows/sets.

When the selection of $M_v$ is layer-specific, information having $L \times K \times \lceil \log_2(N_k) \rceil$ bits is reported through Part1 to indicate the quantity $M_{l,v}$ of frequency-domain basis vectors in each window/set at the l$^{th}$ transmission layer in the L transmission layers.

The value of $M_v$ in each window or set may also be reported and indicated through the above-mentioned method for K=1.

The reporting, by the terminal, the value of $M_v$ will be described hereinafter in conjunction with the specific transmission layers.

Embodiment 1

In this embodiment, the quantity L of transmission layers is 2, K=1, and the quantity $N_1$ of frequency-domain basis vectors in the window/set configured by the network device is 4.

When the selection of $M_v$ is layer-common, the network device fails to configure the parameter $M_v$. Information having $[\log_2(N)] = 2$ bits is reported through Part1 to indicate number $M_v = 2$ of frequency-domain basis vectors selected by the terminal.

In an embodiment of the present disclosure, the network device configures for the terminal the parameter $M_v = 2$, and information having 1 bit is reported through Part1 to indicate the value of $M_v$ is 1 at all transmission layers. When a value of the bit is 0, $M_v$ is 1 at all the transmission layers; otherwise, $M_v$ is 2 at all the transmission layers.

Optionally, it is presumed that the network device configures $M_v = 1$ for the terminal, and the CSI reporting includes PartO, Part1 and Part2. Information having 1 bit is reported through Part0. When a value of the bit is 0, $M_v$ is 1 at all the transmission layers; otherwise, $M_v$ is 2 at all the transmission layers. Then, information having $[\log_2(N)] = 2$ bits is reported through Part1 to indicate $M_v = 2$ frequency-domain basis vectors are used at all the transmission layers.

When the selection of $M_v$ is layer-specific, information having $L \times [\log_2(N)] = 4$ bits is reported through Part1 to indicate that the quantity $M_{1,v}$ of frequency-domain basis vectors at a first layer is 2 and the quantity $M_{2,v}$ of frequency-domain basis vectors at a second layer is 1.

In an embodiment of the present disclosure, the network device configures parameters $M_{1,v} = 4$ and $M_{2,v} = 2$ for the terminal, and information having L=2 bits is reported through Part1 to indicate the value of $M_{1,v}$ at the $l^{\text{th}}$ transmission layer. When values of the two bits are both 0, $M_{l,v} = 1$ and $l = 1,2$ are used at the two layers; otherwise, $M_{1,v} = 4$ and $M_{2,v} = 2$ are used at the two layers.

In a possible embodiment of the present disclosure, the network device configures $M_v = 1$ for the terminal, and the CSI reporting includes PartO, Part1 and Part2. Information having L bits is reported through Part0. When values of the two bits are both 0, $M_{l,v} = 1$ and $l = 1,2$ are used at the two layers; otherwise, $M_{1,v} = 2$ and $M_{2,v} = 1$ reported by the terminal at used at the two layers, and information having $L * [\log_2(N)] = 4$ bits are reported through Part1 to indicate the parameters.

Embodiment 2

In this embodiment, the value of $M_v$ is indicated when the quantity L of transmission layers is 2, K>1, and the quantities $N_1$ and $N_2$ of frequency-domain basis vectors in two windows/sets configured by the network device are 4.

When the selection of $M_v$ is layer-common, the network device fails to configure the parameter $M_v$. Information having $K \times [\log_2(N)] = 4$ bits is reported through Part1 to indicate $M_v = 2$ frequency-domain basis vectors selected by the terminal.

When the selection of $M_v$ is layer-specific, information having $L \times K \times [\log_2(N)] = 8$ bits is reported through Part1 to indicate that the quantities $M_{1,v}$ of frequency-domain basis vectors in each window/set at a first layer in the L transmission layers is 2 and the quantity $M_{2,v}$ of frequency-domain basis vectors in each window/set at a second layer in the L transmission layers is 1.

As shown in Fig. 4, the present disclosure further provides in some embodiments a network side configuration method which includes Step 401 of receiving, by a network device, frequency-domain basis vector information transmitted by a terminal, the frequency-domain basis vector information being determined by the terminal in accordance with estimated downlink channel information.

Optionally, prior to receiving, by the network device, the frequency-domain basis vector information transmitted by the terminal, the network side configuration method further includes configuring, by the network device, a set of frequency-domain basis vectors for the terminal, and the frequency-domain basis vector information received by the network device from the terminal is determined by the terminal in accordance with the downlink channel information and the set of frequency-domain basis vectors.

Optionally, the frequency-domain basis vector information includes at least one of the quantity of frequency-domain basis vectors, indication information corresponding to the frequency-domain basis vector or a target indication content, the indication information corresponding to the frequency-domain basis vector is used to indicate a frequency-domain basis vector selected by the terminal in the set of frequency-domain basis vectors configured by the network device or a frequency-domain basis vector selected by the terminal in a predefined set of frequency-domain basis vectors, and the target indication content includes the set of frequency-domain basis vectors or the predetermined frequency-domain basis vectors.

Optionally, the receiving, by the network device, the frequency-domain basis vector information transmitted by the terminal includes receiving, by the network device, the frequency-domain basis vector information that is indicated through target bit information and transmitted by the terminal, the target bit information is used to indicate the quantity of frequency-domain basis vectors and/or indication information corresponding to the frequency-domain basis vector, and the indication information corresponding to the frequency-domain basis vector is used to indicate a frequency-domain basis vector selected by the terminal in the set of frequency-domain basis vectors configured by the network device or a frequency-domain basis vector selected by the terminal in a set of frequency-domain basis vectors predetermined in the terminal.

Optionally, subsequent to configuring, by the network device, the set of frequency-domain basis vectors for the terminal, the network side configuration method further includes transmitting, by the network device, a triggering state to the terminal, the triggering state is used to indicate a reporting mode of the terminal and used to indicate a codebook parameter configured by the network device for the terminal, and the codebook parameter includes one or more of the set of frequency-domain basis vectors, a size of the set of frequency-domain basis vectors, or start point information of the set of frequency-domain basis vectors.

Optionally, the frequency-domain basis vector information at each transmission layer is the same or different. In the case that the frequency-domain basis vector information at each transmission layer is different, the receiving, by the network device, the frequency-domain basis vector information transmitted by the terminal includes receiving, by the network device, Z pieces of frequency-domain basis vector information, where Z is a positive integer, and Z represents the quantity of transmission layers.

It should be appreciated that, the network side configuration method in the embodiments of the present disclosure corresponds to the network device in the method in Fig. 2, and the implementation of the network side configuration method may refer to that in Fig. 2 with a same technical effect, which will not be particularly defined herein.

As shown in Fig. 5, the present disclosure provides in some embodiments a terminal, which includes a memory 520, a transceiver 500 and a processor 510. The memory 520 is configured to store therein a computer program. The transceiver 500 is configured to transmit and receive data under the control of the processor. The processor 510 is configured to read the computer program in the memory 520 so as to: estimate downlink channel information; determine frequency-domain basis vector information in accordance with the downlink channel information; and transmit the frequency-domain basis vector information to a network device.

In Fig. 5, bus architecture may include a number of buses and bridges connected to each other, so as to connect various circuits for one or more processors 510 and one or more memories 520. In addition, as is known in the art, the bus architecture may be used to connect any other circuits, such as a circuit for a peripheral device, a circuit for a voltage stabilizer and a power management circuit. A bus interface may be provided, and the transceiver 500 may consist of a plurality of elements, i.e., a transmitter and a receiver for communication with any other devices over a transmission medium. With respect to different terminals, a user interface 530 may also be provided for devices which are to be arranged inside or outside the terminal, and these devices may include but not limited to a keypad, a display, a speaker, a microphone and a joystick.

The processor 510 may take charge of managing the bus architecture as well as general processings. The memory 520 may store therein data for the operation of the processor 510.

Optionally, the processor 510 is a Central Processing Unit (CPU), an Application Specific Integrated Circuit (ASIC), a Field-Programmable Gate Array (FPGA) or a Complex Programmable Logic Device (CPLD). The processor may also use multi-core architecture.

The processor is configured to call the computer program in the memory, so as to implement the above-mentioned method in accordance with obtained executable instructions. The processor may also be physically separated from the memory.

Optionally, when determining the frequency-domain basis vector information in accordance with the downlink channel information, the processor is specifically configured to: calculate a compression coefficient corresponding to each frequency-domain basis vector in predetermined frequency-domain basis vectors in accordance with the downlink channel information; and determine the frequency-domain basis vector information in accordance with the compression coefficient.

Optionally, prior to determining the frequency-domain basis vector information in accordance with the downlink channel information, the processor is further configured to receive a set of frequency-domain basis vectors configured by the network device, and when determining the frequency-domain basis vector information in accordance with the downlink channel information, the processor is specifically configured to determine the frequency-domain basis vector information in accordance with the downlink channel information and the set of frequency-domain basis vectors.

Optionally, when determining the frequency-domain basis vector information in accordance with the downlink channel information and the set of frequency-domain basis vectors, the processor is specifically configured to: calculate a compression coefficient corresponding to each frequency-domain basis vector in the set of frequency-domain basis vectors in accordance with the downlink channel information; and determine the frequency-domain basis vector information in accordance with the compression coefficient.

Optionally, subsequent to receiving the set of frequency-domain basis vectors configured by the network device, the processor is further configured to receive a triggering state transmitted by the network device, the triggering state is used to indicate a reporting mode of the terminal and used to indicate a codebook parameter configured by the network device for the terminal, and the codebook parameter includes one or more of the set of frequency-domain basis vectors, a size of the set of frequency-domain basis vectors, or start point information of the set of frequency-domain basis vectors.

Optionally, the frequency-domain basis vector information includes the quantity of frequency-domain basis vectors and indication information corresponding to the frequency-domain basis vector, and the indication information corresponding to the frequency-domain basis vector is used to indicate a frequency-domain basis vector selected by the terminal in the set of frequency-domain basis vectors configured by the network device or a frequency-domain basis vector selected by the terminal in a set of frequency-domain basis vectors predetermined in the terminal.

It should be appreciated that, the terminal in the embodiments of the present disclosure is used to implement the steps of the above-mentioned method with a same technical effect, which will not be particularly defined herein.

As shown in Fig. 6, the present disclosure further provides in some embodiments a network device, which includes a memory 620, a transceiver 600 and a processor 610. The memory 620 is configured to store therein a computer program. The transceiver 610 is configured to receive and transmit data under the control of the processor. The processor 600 is configured to read the computer program in the memory 620, so as to receive frequency-domain basis vector information transmitted by a terminal, and the frequency-domain basis vector information is determined by the terminal in accordance with estimated downlink channel information.

In Fig. 6, bus architecture may include a number of buses and bridges connected to each other, so as to connect various circuits for one or more processors 610 and one or more memories 620. In addition, as is known in the art, the bus architecture may be used to connect any other circuits, such as a circuit for a peripheral device, a circuit for a voltage stabilizer and a power management circuit. A bus interface may be provided, and the transceiver 600 may consist of a plurality of elements, i.e., a transmitter and a receiver for communication with any other devices over a transmission medium. The transmission medium includes a wireless channel, a wired channel, or an optical cable. With respect to different terminals, a user interface 630 may also be provided for devices which are to be arranged inside or outside the terminal, and these devices may include but not limited to a keypad, a display, a speaker, a microphone and a joystick.

The processor 610 may take charge of managing the bus architecture as well as general processings. The memory 620 may store therein data for the operation of the processor 610.

Optionally, the processor 610 is a CPU, an ASIC, an FPGA or a CPLD. The processor may also use multi-core architecture.

The processor is configured to call the computer program in the memory, so as to implement the above-mentioned method in accordance with obtained executable instructions. The processor may also be physically separated from the memory.

Optionally, prior to receiving the frequency-domain basis vector information transmitted by the terminal, the processor is further configured to configure a set of frequency-domain basis vectors for the terminal, and the frequency-domain basis vector information received by the network device from the terminal is determined by the terminal in accordance with the downlink channel information and the set of frequency-domain basis vectors.

Optionally, the frequency-domain basis vector information includes at least one of the quantity of frequency-domain basis vectors, indication information corresponding to the frequency-domain basis vector, or a target indication content, the indication information corresponding to the frequency-domain basis vector is used to indicate a frequency-domain basis vector selected by the terminal in the set of frequency-domain basis vectors configured by the network device or a frequency-domain basis vector selected by the terminal in a set of frequency-domain basis vectors predetermined in the terminal, and the target indication content includes the set of frequency-domain basis vectors or the predetermined frequency-domain basis vectors.

Optionally, subsequent to configuring the set of frequency-domain basis vectors for the terminal, the processor is further configured to transmit a triggering state to the terminal, the triggering state is used to indicate a reporting mode of the terminal and used to indicate a codebook parameter configured by the network device for the terminal, and the codebook parameter includes one or more of the set of frequency-domain basis vectors, a size of the set of frequency-domain basis vectors, or start point information of the set of frequency-domain basis vectors.

It should be appreciated that, the network device in the embodiments of the present disclosure is used to implement the steps of the above-mentioned method with a same technical effect, which will not be particularly defined herein.

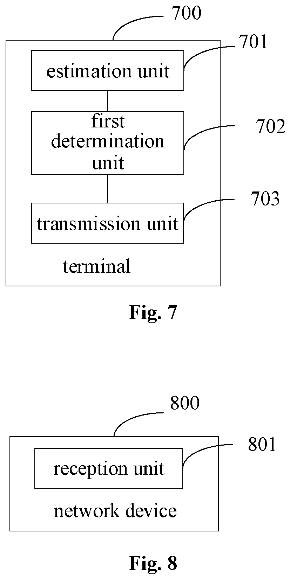

As shown in Fig. 7, the present disclosure further provides in some embodiments a terminal 700, which includes: an estimation unit 701 configured to estimate downlink channel information; a first determination unit 702 configured to determine frequency-domain basis vector information in accordance with the downlink channel information; and a transmission unit 703 configured to transmit the frequency-domain basis vector information to a network device.

Optionally, the first determination unit 702 includes: a calculation unit configured to calculate a compression coefficient corresponding to each frequency-domain basis vector in predetermined frequency-domain basis vectors in accordance with the downlink channel information; and a second determination unit configured to determine the frequency-domain basis vector information in accordance with the compression coefficient.

It should be appreciated that, the terminal in the embodiments of the present disclosure is used to implement the steps of the above-mentioned method with a same technical effect, which will not be particularly defined herein.

As shown in Fig. 8, the present disclosure further provides in some embodiments a network device 800, which includes a reception unit 801 configured to receive frequency-domain basis vector information transmitted by a terminal, the frequency-domain basis vector information being determined by the terminal in accordance with estimated downlink channel information.

Optionally, the network device further includes a configuration unit configured to configure a set of frequency-domain basis vectors for the terminal, and the frequency-domain basis vector information received by the network device from the terminal is determined by the terminal in accordance with the downlink channel information and the set of frequency-domain basis vectors.

It should be appreciated that, the network device in the embodiments of the present disclosure is used to implement the steps of the above-mentioned method with a same technical effect, which will not be particularly defined herein.

It should be appreciated that, the units in the embodiments of the present disclosure are for illustrative purposes, and they are provided merely on the basis of their logic functions. The units may be integrated in a processing unit, or physically separated from each other, or two or more units may be integrated in one unit. The integrated units may be implemented in the form of hardware or a software functional unit.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

The present disclosure further provides in some embodiments a processor-readable storage medium storing therein a computer program. The computer program is used to be executed by a processor so as to implement the above-mentioned information reporting method or network side configuration method.

The processor-readable storage medium may be any available medium or data storage device capable of being accessed by a processor, which includes, but not limited to, a magnetic memory (e.g., floppy disk, hard disk, magnetic tape, or Magnetic Optical disk (MO)), an optical memory (e.g., Compact Disk (CD), Digital Video Disk (DVD), Blue-ray Disk (BD), or High-definition Versatile Disk (HVD)), or a semiconductor memory (e.g., ROM, Electrically Programmable ROM (EPROM), Electrically Erasable PROM (EEPROM), NAND flash, or Solid-State Disk (SSD)).

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory, Compact Disc-Read Only Memory (CD-ROM) and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should be noted that a person skilled in the art can make various changes and modifications to the present application without departing from the spirit and scope of the present application. In this way, if these changes and modifications of the present application fall within the scope of the claims of the present application and their equivalent technologies, the present application is also intended to include these changes and modifications.

**Claims**

1. An information reporting method, comprising:

    estimating, by a terminal, downlink channel information;
    determining, by the terminal, frequency-domain basis vector information in accordance with the downlink channel information;
    transmitting, by the terminal, the frequency-domain basis vector information to a network device.

2. The information reporting method according to claim 1, wherein the determining, by the terminal, the frequency-domain basis vector information in accordance with the downlink channel information comprises:

    calculating, by the terminal, a compression coefficient corresponding to each frequency-domain basis vector in predetermined frequency-domain basis vectors in accordance with the downlink channel information;
    determining, by the terminal, the frequency-domain basis vector information in accordance with the compression coefficient.

3. The information reporting method according to claim 1, wherein prior to determining, by the terminal, the frequency-domain basis vector information in accordance with the downlink channel information, the information reporting method further comprises:

    receiving, by the terminal, a set of frequency-domain basis vectors configured by the network device;
    the determining, by the terminal, the frequency-domain basis vector information in accordance with the downlink channel information comprises:
    determining, by the terminal, the frequency-domain basis vector information in accordance with the downlink channel information and the set of frequency-domain basis vectors.

4. The information reporting method according to claim 3, wherein the determining, by the terminal, the frequency-domain basis vector information in accordance with the downlink channel information and the set of frequency-domain basis vectors comprises:

    calculating, by the terminal, a compression coefficient corresponding to each frequency-domain basis vector in the set of frequency-domain basis vectors in accordance with the downlink channel information;
    determining, by the terminal, the frequency-domain basis vector information in accordance with the compression coefficient.

5. The information reporting method according to claim 3, wherein the frequency-domain basis vector information comprises at least one of the quantity of frequency-domain basis vectors, indication information corresponding to the frequency-domain basis vector, or a target indication content, wherein the indication information corresponding to the frequency-domain basis vector is used to indicate a frequency-domain basis vector selected by the terminal in the set of frequency-domain basis vectors configured by the network device or a frequency-domain basis vector selected by the terminal in a set of frequency-domain basis vectors predetermined in the terminal, and the target indication content comprises the set of frequency-domain basis vectors or the predetermined frequency-domain basis vectors.

6. The information reporting method according to claim 3, wherein subsequent to receiving, by the terminal, the set of frequency-domain basis vectors configured by the network device, the information reporting method further comprises:

    receiving, by the terminal, a triggering state transmitted by the network device, the triggering state being used to indicate a reporting mode of the terminal and used to indicate a codebook parameter configured by the network device for the terminal, the codebook parameter comprising one or more of: the set of frequency-domain basis vectors, a size of the set of frequency-domain basis vectors, or start point information of the set of frequency-domain basis vectors;
    determining, by the terminal, the codebook parameter in accordance with the triggering state.

7. The information reporting method according to claim 1, wherein prior to transmitting, by the terminal, the frequency-domain basis vector information to the network device, the information reporting method further comprises:

determining target bit information in accordance with the frequency-domain basis vector information, the target bit information is used to indicate the quantity of frequency-domain basis vectors and/or indication information corresponding to the frequency-domain basis vector, and the indication information corresponding to the frequency-domain basis vector is used to indicate the frequency-domain basis vector selected by the terminal in the set of frequency-domain basis vectors configured by the network device or a frequency-domain basis vector selected by the terminal in a set of frequency-domain basis vectors predetermined in the terminal,

wherein the transmitting, by the terminal, the frequency-domain basis vector information to the network device comprises:

transmitting, by the terminal to the network device, the frequency-domain basis vector information indicated through the target bit information.

8. The information reporting method according to claim 5, wherein a reporting structure of the terminal comprises a two-part reporting structure or a three-part reporting structure;

in the case that the frequency-domain basis vector information comprises the target indication content and the reporting structure of the terminal comprises the two-part reporting structure, the transmitting, by the terminal, the frequency-domain basis vector information to the network device comprises:

transmitting, by the terminal, the target indication content to the network device through a first target part reporting structure, and the first target part reporting structure is a first part reporting structure of the two-part reporting structure,

wherein in the case that the reporting structure of the terminal comprises the three-part reporting structure, the transmitting, by the terminal, the target indication content to the network device comprises:

transmitting, by the terminal, the target indication content to the network device through a second target part reporting structure, and the second target part reporting structure is a first part reporting structure of the three-part reporting structure.

9. The information reporting method according to claim 1, wherein the frequency-domain basis vector information at each transmission layer is the same or different;

in the case that the frequency-domain basis vector information at each transmission layer is different, the transmitting, by the terminal, the frequency-domain basis vector information to the network device comprises:

transmitting, by the terminal, Z pieces of frequency-domain basis vector information to the network device, where Z is a positive integer, and Z represents the quantity of transmission layers.

10. A network side configuration method, comprising:

receiving, by a network device, frequency-domain basis vector information transmitted by a terminal, the frequency-domain basis vector information being determined by the terminal in accordance with estimated downlink channel information.

11. The network side configuration method according to claim 10, wherein prior to receiving, by the network device, the frequency-domain basis vector information transmitted by the terminal, the network side configuration method further comprises:

configuring, by the network device, a set of frequency-domain basis vectors for the terminal,

wherein the frequency-domain basis vector information received by the network device from the terminal is determined by the terminal in accordance with the downlink channel information and the set of frequency-domain basis vectors.

12. The network side configuration method according to claim 11, wherein the frequency-domain basis vector information comprises at least one of the quantity of frequency-domain basis vectors, indication information corresponding to the frequency-domain basis vector, or a target indication content, wherein the indication information corresponding to the frequency-domain basis vector is used to indicate a frequency-domain basis vector selected by the terminal in the set of frequency-domain basis vectors configured by the network device or a frequency-domain basis vector selected by the terminal in a set of frequency-domain basis vectors predetermined in the terminal, and the target indication content comprises the set of frequency-domain basis vectors or the predetermined frequency-domain basis vectors.

13. The network side configuration method according to claim 10, wherein the receiving, by the network device, the frequency-domain basis vector information transmitted by the terminal comprises:

receiving, by the network device, the frequency-domain basis vector information that is indicated through target bit information and transmitted by the terminal, the target bit information is used to indicate the quantity of frequency-domain basis vectors and/or indication information corresponding to the frequency-domain basis vector, and the indication information corresponding to the frequency-domain basis vector is used to indicate a frequency-domain basis vector selected by the terminal in the set of frequency-domain basis vectors configured by the network device or a frequency-domain basis vector selected by the terminal in a set of frequency-domain basis vectors predetermined in the terminal.

14. The network side configuration method according to claim 11, wherein subsequent to configuring, by the network device, the set of frequency-domain basis vectors for the terminal, the network side configuration method further comprises:
transmitting, by the network device, a triggering state to the terminal, wherein the triggering state is used to indicate a reporting mode of the terminal and used to indicate a codebook parameter configured by the network device for the terminal, and the codebook parameter comprises one or more of: the set of frequency-domain basis vectors, a size of the set of frequency-domain basis vectors, or start point information of the set of frequency-domain basis vectors.

15. The network side configuration method according to claim 10, wherein the frequency-domain basis vector information at each transmission layer is the same or different;
in the case that the frequency-domain basis vector information at each transmission layer is different, the receiving, by the network device, the frequency-domain basis vector information transmitted by the terminal comprises:
receiving, by the network device, Z pieces of frequency-domain basis vector information, where Z is a positve integer, and Z represents the quantity of transmission layers.

16. A terminal, comprising a memory, a transceiver and a processor, wherein
the memory is configured to store therein a computer program, and the transceiver is configured to transmit and receive data under the control of the processor, wherein the processor is configured to read the computer program in the memory to:

estimate downlink channel information;
determine frequency-domain basis vector information in accordance with the downlink channel information;
transmit the frequency-domain basis vector information to a network device.

17. The terminal according to claim 16, wherein the determining the frequency-domain basis vector information in accordance with the downlink channel information comprises:

calculating a compression coefficient corresponding to each frequency-domain basis vector in predetermined frequency-domain basis vectors in accordance with the downlink channel information;
determining the frequency-domain basis vector information in accordance with the compression coefficient.

18. The terminal according to claim 16, wherein prior to determining the frequency-domain basis vector information in accordance with the downlink channel information, the processor is further configured to:

receive a set of frequency-domain basis vectors configured by the network device;
wherein determining the frequency-domain basis vector information in accordance with the downlink channel information comprises:
determining the frequency-domain basis vector information in accordance with the downlink channel information and the set of frequency-domain basis vectors.

19. The terminal according to claim 18, wherein the determining the frequency-domain basis vector information in accordance with the downlink channel information and the set of frequency-domain basis vectors comprises:

calculating a compression coefficient corresponding to each frequency-domain basis vector in the set of frequency-domain basis vectors in accordance with the downlink channel information;
determining the frequency-domain basis vector information in accordance with the compression coefficient.

20. The terminal according to claim 18, wherein subsequent to receiving the set of frequency-domain basis vectors configured by the network device, the processor is further configured to:

receive a triggering state transmitted by the network device, the triggering state being used to indicate a reporting mode of the terminal and used to indicate a codebook parameter configured by the network device for the terminal, the codebook parameter comprising one or more of: the set of frequency-domain basis vectors, a size of the set of frequency-domain basis vectors, or start point information of the set of frequency-domain basis vectors;

determine the codebook parameter in accordance with the triggering state.

21. The terminal according to claim 20, wherein the frequency-domain basis vector information comprises at least one of the quantity of frequency-domain basis vectors, indication information corresponding to the frequency-domain basis vector, or a target indication content, wherein the indication information corresponding to the frequency-domain basis vector is used to indicate a frequency-domain basis vector selected by the terminal in the set of frequency-domain basis vectors configured by the network device or a frequency-domain basis vector selected by the terminal in a set of frequency-domain basis vectors predetermined in the terminal, and the target indication content comprises the set of frequency-domain basis vectors or the predetermined frequency-domain basis vectors.

22. A network device, comprising a memory, a transceiver and a processor, wherein the memory is configured to store therein a computer program, and the transceiver is configured to receive and transmit data under the control of the processor, wherein the processor is configured to read the computer program in the memory to:

receive frequency-domain basis vector information transmitted by a terminal, wherein the frequency-domain basis vector information is determined by the terminal in accordance with estimated downlink channel information.

23. The network device according to claim 22, wherein prior to receiving the frequency-domain basis vector information transmitted by the terminal, the processor is further configured to:

configure a set of frequency-domain basis vectors for the terminal,
wherein the frequency-domain basis vector information received by the network device from the terminal is determined by the terminal in accordance with the downlink channel information and the set of frequency-domain basis vectors.

24. The network device according to claim 23, wherein the frequency-domain basis vector information comprises at least one of the quantity of frequency-domain basis vectors, indication information corresponding to the frequency-domain basis vector, or a target indication content, wherein the indication information corresponding to the frequency-domain basis vector is used to indicate a frequency-domain basis vector selected by the terminal in the set of frequency-domain basis vectors configured by the network device or a frequency-domain basis vector selected by the terminal in a set of frequency-domain basis vectors predetermined in the terminal, and the target indication content comprises the set of frequency-domain basis vectors or the predetermined frequency-domain basis vectors.

25. The network device according to claim 23, wherein subsequent to configuring the set of frequency-domain basis vectors for the terminal, the processor is further configured to:

transmit a triggering state to the terminal, wherein the triggering state is used to indicate a reporting mode of the terminal and used to indicate a codebook parameter configured by the network device for the terminal, and the codebook parameter comprises one or more of: the set of frequency-domain basis vectors, a size of the set of frequency-domain basis vectors, or start point information of the set of frequency-domain basis vectors.

26. A terminal, comprising:

an estimation unit configured to estimate downlink channel information;
a first determination unit configured to determine frequency-domain basis vector information in accordance with the downlink channel information;
a transmission unit configured to transmit the frequency-domain basis vector information to a network device.

27. The terminal according to claim 26, wherein the first determination unit comprises:

a calculation unit configured to calculate a compression coefficient corresponding to each frequency-domain basis vector in predetermined frequency-domain basis vectors in accordance with the downlink channel information;
a second determination unit configured to determine the frequency-domain basis vector information in accordance with the compression coefficient.

**28.** A network device, comprising:

a reception unit configured to receive frequency-domain basis vector information transmitted by a terminal, wherein the frequency-domain basis vector information is determined by the terminal in accordance with estimated downlink channel information.

**29.** The network device according to claim 28, further comprising:

a configuration unit configured to configure a set of frequency-domain basis vectors for the terminal,

wherein the frequency-domain basis vector information received by the network device from the terminal is determined by the terminal in accordance with the downlink channel information and the set of frequency-domain basis vectors.

**30.** A processor-readable storage medium storing therein a computer program, wherein the computer program is used to be executed by a processor to implement the information reporting method according to any one of claims 1 to 9, or the network side configuration method according to any one of claims 10 to 15.

network device

11

terminal

**Fig. 1**

| estimating, by a terminal, downlink channel information | 201 |

| determining, by the terminal, frequency-domain basis vector information in accordance with the downlink channel information | 202 |

| transmitting, by the terminal, the frequency-domain basis vector information to a network device | 203 |

**Fig. 2**

NZP CSI-RS for CMR

| triggering state 1 | — | aperiodic CSI reporting (CRI/RI/ PMI/CQI) | — | aperiodic resource set 1 | — | resource set 1 | — | NZP CSI-RS resources 0-7 |

DCI triggering

NZP CSI-RS for IMR

| aperiodic resource set 2 | — | resource set 1 | — | CSI-IM resources 0-7 |

**Fig. 3**

receiving, by a network device, frequency-domain basis vector information transmitted by a terminal, the frequency-domain basis vector information being determined by the terminal in accordance with estimated downlink channel information ⟍ 401

**Fig. 4**

510

processor

530

520

bus interface

500

transceiver

memory

**Fig. 5**

610

processor

630

620

bus interface

600

transceiver

memory

**Fig. 6**

```
                              ┌── 700
        ┌──────────────────────────┐── 701
        │    ┌─────────────────┐    │
        │    │ estimation unit │    │
        │    └─────────────────┘    │
        │             │             │
        │    ┌─────────────────┐    │── 702
        │    │      first      │    │
        │    │  determination  │    │
        │    │      unit       │    │
        │    └─────────────────┘    │
        │             │             │── 703
        │    ┌─────────────────┐    │
        │    │transmission unit│    │
        │    └─────────────────┘    │
        │          terminal         │
        └──────────────────────────┘
```

**Fig. 7**

```
                              ┌── 800
        ┌──────────────────────────┐── 801
        │    ┌─────────────────┐    │
        │    │  reception unit │    │
        │    └─────────────────┘    │
        │       network device      │
        └──────────────────────────┘
```

**Fig. 8**

<div style="text-align:center">**INTERNATIONAL SEARCH REPORT**</div>

| | International application No. |
|---|---|
| | **PCT/CN2022/081482** |

| A. | CLASSIFICATION OF SUBJECT MATTER |
|---|---|

H04W 72/00(2009.01)i

According to International Patent Classification (IPC) or to both national classification and IPC

| B. | FIELDS SEARCHED |
|---|---|

Minimum documentation searched (classification system followed by classification symbols)

H04W，H04L

Documentation searched other than minimum documentation to the extent that such documents are included in the fields searched

Electronic data base consulted during the international search (name of data base and, where practicable, search terms used)

CNTXT, VCN, VEN, EPTXT, WOTXT, USTXT, 3GPP, CNKI: 频域基向量, 频域向量, 下行信道, 导频, 参考信号, csi, frequency domain basis vector, FD basis, frequency vector, cha?nel, pilot?, rs, reference signal

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111756415 A (HUAWEI TECHNOLOGIES CO., LTD.) 09 October 2020 (2020-10-09) description, paragraphs [0004]-[0064], [0163]-[0200] | 1-5, 10-12, 16-19, 22-24, 26-30 |
| X | WO 2020142974 A1 (QUALCOMM INC.) 16 July 2020 (2020-07-16) claims 1-10 | 1-5, 10-12, 16-19, 22-24, 26-30 |
| X | WO 2020199964 A1 (HUAWEI TECHNOLOGIES CO., LTD.) 08 October 2020 (2020-10-08) description, paragraphs [0190]-[0195] | 1-5, 10-12, 16-19, 22-24, 26-30 |
| A | CN 111435849 A (HUAWEI TECHNOLOGIES CO., LTD.) 21 July 2020 (2020-07-21) entire document | 1-30 |
| A | CN 110581724 A (TELECOMMUNICATIONS TECHNOLOGY RESEARCH INSTITUTE CO., LTD.) 17 December 2019 (2019-12-17) entire document | 1-30 |
| A | HUAWEI, R1-1903980. ""Phase Randomization and Correction for CSI Quantization in Frequency Domain"" (3GPP TSG RAN WG1 Meeting #96bis), 12 April 2019 (2019-04-12), entire document | 1-30 |

☐ Further documents are listed in the continuation of Box C.　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 May 2022** | **25 May 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/081482**

| Patent document cited in search report | | | Publication date (day/month/year) | Patent family member(s) | | | Publication date (day/month/year) |
|---|---|---|---|---|---|---|---|
| CN | 111756415 | A | 09 October 2020 | None | | | |
| WO | 2020142974 | A1 | 16 July 2020 | US | 2022039107 | A1 | 03 February 2022 |
| | | | | WO | 2020143699 | A1 | 16 July 2020 |
| | | | | TW | 202032936 | A | 01 September 2020 |
| | | | | KR | 20210112313 | A | 14 September 2021 |
| | | | | CN | 113273100 | A | 17 August 2021 |
| | | | | SG | 11202105993 X | A | 29 July 2021 |
| | | | | EP | 3909148 | A1 | 17 November 2021 |
| WO | 2020199964 | A1 | 08 October 2020 | US | 2022038145 | A1 | 03 February 2022 |
| | | | | EP | 3952120 | A1 | 09 February 2022 |
| CN | 111435849 | A | 21 July 2020 | KR | 20210126013 | A | 19 October 2021 |
| | | | | US | 2021336677 | A1 | 28 October 2021 |
| CN | 110581724 | A | 17 December 2019 | EP | 3806346 | A1 | 14 April 2021 |
| | | | | US | 2021273708 | A1 | 02 September 2021 |

Form PCT/ISA/210 (patent family annex) (January 2015)

28

**EP 4 319 354 A1**

## REFERENCES CITED IN THE DESCRIPTION

**Patent documents cited in the description**

- CN 202110362623